Europäisches Patentamt

European Patent Office

Office européen des brevets

(19)

(11) Numéro de publication : **0 115 978**
**B1**

# FASCICULE DE BREVET EUROPÉEN

(12)

(45) Date de publication du fascicule du brevet :
27.05.87

(51) Int. Cl.⁴ : **G 21 C 19/32**

(21) Numéro de dépôt : **84400054.7**

(22) Date de dépôt : **11.01.84**

(54) **Machine pour la fermeture de fûts à l'intérieur d'une piscine et couvercle de fût prévu pour être mis en place à l'aide d'une telle machine.**

(30) Priorité : **14.01.83 FR 8300525**

(43) Date de publication de la demande :
**15.08.84 Bulletin 84/33**

(45) Mention de la délivrance du brevet :
**27.05.87 Bulletin 87/22**

(84) Etats contractants désignés :
**BE CH DE GB IT LI LU NL SE**

(56) Documents cités :
**FR-A- 2 287 092**
**FR-A- 2 428 892**
**LU-A-  64 047**

(73) Titulaire : **COMMISSARIAT A L'ENERGIE ATOMIQUE Etablissement de Caractère Scientifique Technique et Industriel**
**31/33, rue de la Fédération**
**F-75015 Paris (FR)**
**BE DE GB**
**COMPAGNIE GENERALE DES MATIERES NUCLEAI-RES (COGEMA)**
**2, rue Paul Dautier B.P. 4**
**F-78141 Velizy-Villacoublay (FR)**
**CH IT LI LU NL SE**

(72) Inventeur : **Dabat, Robert**
**34, Résidence du CLos du Bois**
**F-50130 Octeville (FR)**
Inventeur : **Jamet, Claude**
**40, Avenue Danton**
**F-50120 Equeurdreville Hainneville (FR)**

(74) Mandataire : **Mongrédien, André et al**
**c/o BREVATOME 25, rue de Ponthieu**
**F-75008 Paris (FR)**

EP 0 115 978 B1

## Description

La présente invention se rapporte à une machine permettant de fermer à distance des fûts contenant par exemple des matières radioactives ou contaminées à l'intérieur d'une piscine, ainsi qu'à un couvercle de fût prévu pour être mis en place à l'aide d'une telle machine.

Le transfert de matières radioactives ou contaminées entre une piscine de haute activité et un site externe tel qu'un site de stockage, s'effectue généralement dans des fûts. Au cours de ce transfert, les fûts circulent dans un canal incliné, de telle sorte qu'ils sont pratiquement couchés. Si on désire les remplir complètement et économiser ainsi un maximum de temps sur les transferts, il est indispensable de les munir de couvercles. De plus, compte tenu de la nature des produits transportés, la pose et le retrait des couvercles ne peuvent se faire qu'à distance.

A ce jour, on connaît une machine pour la fermeture de fûts permettant de résoudre ce problème. Cette machine est amenée à l'intérieur même de la piscine, juste au-dessus des fûts à fermer, et elle comprend des moyens pour verrouiller les couvercles sur les fûts par clipage. Après le transfert, les fûts sont ouverts par décapsulage.

Cette machine ne donne toutefois pas de résultats satisfaisants, notamment pour les deux raisons suivantes :

1) la machine devant être amenée tout près des fûts chargés de matières radioactives ou contaminées, elle fonctionne donc en immersion et se trouve elle-même contaminée ;

2) au cours de leur transfert, les fûts reçoivent des chocs et ils sont déformés légèrement mais suffisamment pour qu'il ne soit plus possible d'emboîter les couvercles après un certain nombre de transferts.

La présente invention a précisément pour objet une machine pour la fermeture de fûts à l'intérieur d'une piscine ne présentant pas les inconvénients de cette machine connue et pouvant notamment être située pratiquement en totalité au-dessus de la piscine, tout en utilisant une technique permettant d'assurer la fermeture des fûts même lorsque ceux-ci sont déformés.

A cet effet et conformément à l'invention, il est proposé une machine pour la fermeture de fûts à l'intérieur d'une piscine, caractérisée en ce qu'elle comprend une perche télescopique équipée à son extrémité inférieure d'une tête de préhension, des moyens de manutention pour déplacer cette dernière entre une position basse située dans la piscine et une position haute située au-dessus de la piscine, des moyens de transfert pour transférer un couvercle sous la tête de préhension lorsque celle-ci est en position haute, et des moyens de commande pour la mise en œuvre de moyens de verrouillage du couvercle sur le fût, les moyens de manutention, les moyens de transfert et les moyens de commande étant situés au-dessus de la piscine, et la tête de préhension portant des moyens de raccordement des moyens de commande aux moyens de verrouillage.

Dans une telle machine, seule la partie inférieure de la perche télescopique portant la tête de préhension est immergée lorsqu'elle est en position basse afin d'assurer la fermeture d'un fût, le reste de la machine étant disposé en totalité au-dessus de la piscine, de telle sorte qu'il n'est pas contaminé.

Selon un mode de réalisation préféré de l'invention, les moyens pour transférer un couvercle sous la tête de préhension comprennent un barillet, des moyens pour déposer un couvercle sur le barillet, et des moyens pour faire tourner le barillet, ce dernier présentant en outre au moins une ouverture apte à permettre le passage d'un couvercle lorsque cette ouverture est placée en dessous de la tête de préhension et que cette dernière est en position haute.

Les moyens pour déposer un couvercle sur le barillet comprennent alors, de préférence, un magasin pouvant contenir un certain nombre de couvercles empilés, une porte guillotine apte à obturer la partie inférieure du magasin, et des moyens pour retenir les autres couvercles lorsque le couvercle qui se trouve à la partie inférieure du magasin chute sur le barillet après ouverture de la porte.

Conformément à une autre caractéristique de l'invention, les moyens de verrouillage du couvercle sur le fût comprennent au moins un joint gonflable porté par le couvercle, les moyens de commande étant des moyens de commande pneumatiques et les moyens de raccordement comprenant des raccords pneumatiques autoobturants.

Grâce à cette dernière caractéristique, il est clair que la fermeture des fûts peut être réalisée même lorsque ceux-ci sont déformés après un certain nombre de chocs subis au cours de leurs transferts successifs.

L'invention a également pour objet un couvercle de fût prévu pour être mis en place à l'aide d'une machine comportant cette dernière caractéristique. Ce couvercle est caractérisé en ce qu'il présente à sa périphérie au moins une gorge dans laquelle est logé le joint gonflable et, dans sa partie centrale, un raccord pneumatique autoobturant communiquant avec ce joint, et des moyens de préhension aptes à coopérer avec la tête de préhension de la machine.

De préférence, le joint gonflable communique avec au moins une partie apparente après fermeture du fût, cette partie pouvant être percée par des moyens appropriés lorsqu'on désire ouvrir le fût. Cette partie apparente peut notamment être un joint torique disposé à la périphérie d'une bride formée sur le couvercle. Grâce à cette caractéristique, l'ouverture du fût peut être obtenue à l'aide d'une aiguille, quelle que soit la position angulaire du fût, à condition que le fût soit placé verticalement et à la bonne hauteur.

Selon une autre caractéristique de l'invention, le couvercle comporte une cavité au fond de laquelle est disposé le raccord pneumatique auto-obturant, les moyens de préhension comprenant un joint logé dans ladite cavité et apte à venir se loger dans une gorge correspondante de la tête de préhension.

On décrira maintenant, à titre d'exemple non limitatif, un mode de réalisation préféré de l'invention en se référant aux dessins annexés dans lesquels :

la figure 1 est une vue en coupe schématique d'une installation comprenant une piscine dans laquelle on introduit des matières radioactives ou contaminées dans des fûts, un site de stockage communiquant avec la piscine par un canal incliné, et la machine selon l'invention pour fermer les fûts à l'intérieur de la piscine ;

la figure 2 est une vue en coupe à plus grande échelle d'une partie de la machine pour la fermeture de fûts de l'installation de la figure 1 ; et,

la figure 3 représente encore à plus grande échelle un couvercle selon l'invention dont la mise en place et l'accrochage sur l'extrémité du fût est réalisée à l'aide de la machine de la figure 2.

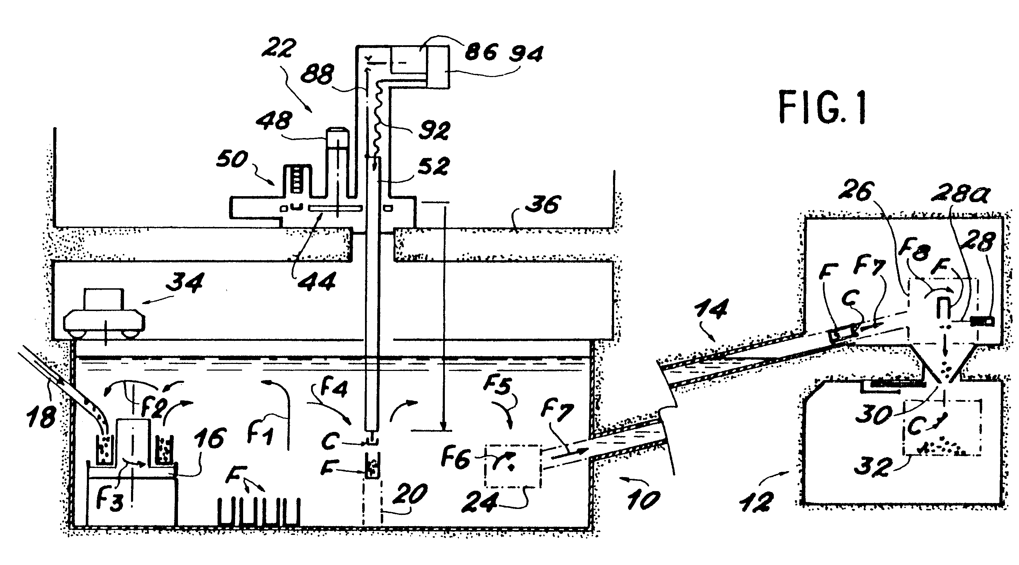

Afin d'illustrer une application possible de la machine selon l'invention, on a représenté sur la figure 1 une installation comprenant une piscine de haute activité 10, un site de stockage 12 et un canal incliné 14 par lequel on peut transférer des fûts contenant une matière radioactive ou contaminée depuis la piscine 10 jusqu'au site de stockage 12.

De façon plus précise, des fûts F vides sont stockés en position verticale dans le fond de la piscine 10. Lorsque cela est nécessaire, ces fûts sont acheminés un à un sur un manège 16 également disposé dans la piscine, comme l'indique la flèche $f_1$ sur la figure 1. La rotation du manège 16 amène successivement chaque fût vide en dessous d'une goulotte 18 (flèche $f_2$). La goulotte 18 sert à remplir les fûts d'un produit radioactif ou contaminé.

Après une nouvelle rotation du manège 16 symbolisée par la flèche $f_3$ sur la figure 1, le fût rempli est amené, toujours dans la piscine 10 (flèche $f_4$), sur un dispositif de positionnement approprié schématisé par la référence 20. A ce moment, et conformément à l'invention, le fût F est fermé par un couvercle C à l'aide de la machine 22 selon l'invention, qui sera décrite plus en détail ultérieurement.

Le fût rempli et fermé est ensuite transféré comme l'indique la flèche $f_5$ dans un boisseau de départ 24 également disposé à l'intérieur de la piscine 10 et communiquant avec le canal incliné 14. A l'intérieur du boisseau 24, le fût est incliné dans une position pratiquement couchée comme l'indique la flèche $f_6$. Par le canal 14, le fût quitte la piscine 10 (flèche $f_7$) pour déboucher au niveau du site de stockage 12 dans une casemate d'arrivée 26 où il est à nouveau basculé (flèche $f_8$) en position verticale, le couvercle étant placé en bas.

Des moyens 28 prévus dans la casemate 26 assurent, comme on le verra ultérieurement, l'ouverture du fût et la chute simultanée du couvercle et des produits radioactifs ou contaminés dans un silo 30 qui débouche par exemple au-dessus d'un récipient 32 au niveau du site 12.

Bien entendu, les différents mouvements impartis au fût F et symbolisés par les flèches $f_1$ à $f_8$ sur la figure 1 peuvent être obtenus à l'aide de tout moyen connu approprié. Ainsi, les moyens pour effectuer les mouvements $f_1$, $f_4$ et $f_5$ peuvent être constitués par exemple par un pont roulant 34.

Conformément à l'invention, on voit sur la figure 1 que la machine 22 pour fermer les fûts à l'intérieur de la piscine 10 est disposée dans sa quasi-totalité au-dessus d'une dalle 36 surplombant la piscine 10.

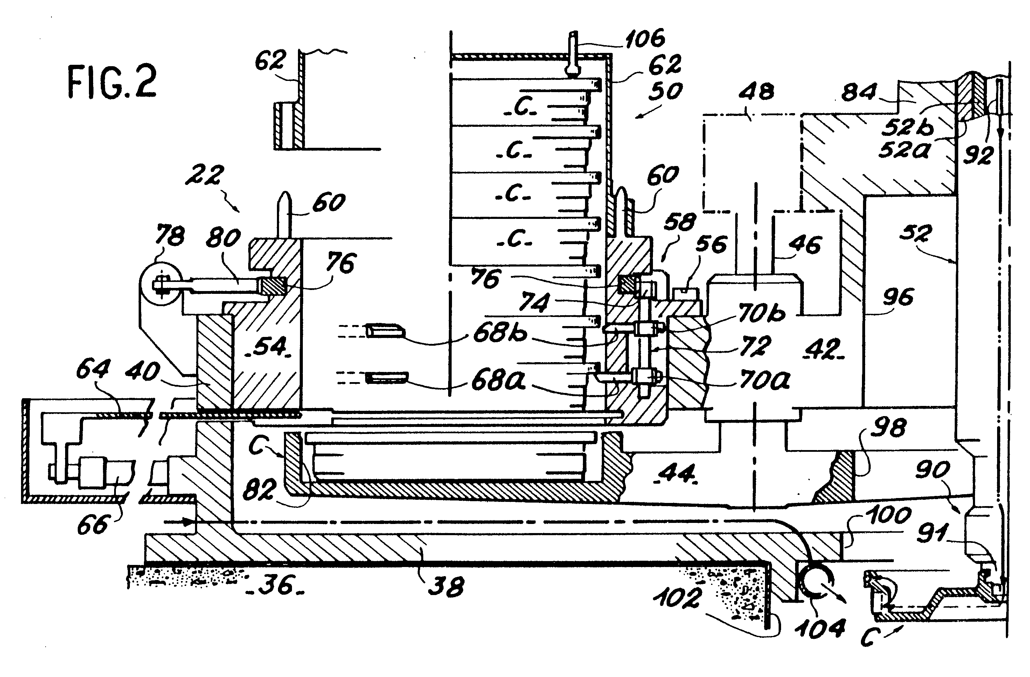

De façon plus précise et comme l'illustre la figure 2, la machine 22 repose sur la dalle 36 par une semelle 38 sur laquelle est soudée une virole 40 fermée à sa partie supérieure par une plaque horizontale épaisse 42. A l'intérieur de l'espace ainsi défini entre la semelle 38, la virole 40 et la plaque 42 est monté de façon tournante un barillet 44 constitué par un plateau suspendu à un axe vertical 46 traversant la plaque 42. L'axe 46 est en appui sur la face supérieure de la plaque 42 par un palier vertical (non représenté) démontable de l'extérieur. La rotation du plateau 44 est commandée par un moteur 48 disposé à l'extrémité supérieure de l'arbre 46.

Le barillet 44 sert à transférer un à un les couvercles C depuis un magasin 50 jusqu'à une perche télescopique verticale 52 disposée au-dessus du dispositif de positionnement 20 et grâce à laquelle les couvercles sont ensuite descendus un à un dans la piscine et fixés sur les fûts F.

Le magasin à couvercles 50 est fixé sur la plaque 42 de façon excentrée par rapport à l'axe 46 du barillet, définissant ainsi pour ce dernier un poste d'alimentation en couvercles. De façon plus précise, le magasin 50 comprend une couronne 54 fixée de façon démontable sur la plaque 42 par exemple au moyen de vis telles que 56. La couronne 54 traverse la plaque 42 et comporte dans son épaisseur un ensemble de distribution 58 permettant de faire descendre les couvercles C un à un comme on le verra ultérieurement. Sur sa face supérieure, la couronne 54 comporte trois colonnes de guidage 60 sur lesquelles est reçu le dessus 62 du magasin, formant avec la couronne 54 une enceinte de confinement à l'intérieur de laquelle peuvent être logés un certain nombre de couvercles C empilés horizontalement les uns sur les autres (ces couvercles sont au nombre de 7 dans la variante représentée).

A son extrémité inférieure, c'est-à-dire en dessous de la plaque 42, la couronne 54 est munie d'une porte guillotine horizontale 64 commandée par un vérin 66 disposé à l'extérieur de la virole 40 et traversant cette dernière de façon à pouvoir dégager l'extrémité inférieure ouverte de la couronne 54 lorsqu'un couvercle C doit être déposé sur le barillet 44.

Dans la variante représentée sur la figure 2, l'ensemble de distribution 58 qui permet avec la porte guillotine 64 de faire descendre les couvercles C un à un sur le barillet 44 comprend, en au moins trois points de la périphérie de la couronne, deux taquets 68a et 68b logés dans l'épaisseur de la couronne 54 à deux niveaux différents. De préférence, chaque couvercle C comprend une bride 110 et les taquets 68a et 68b sont disposés respectivement au niveau de la face inférieure de la bride 110 des deux couvercles C disposés en dessous de la pile contenue dans le magasin. Les taquets 68a et 68b peuvent coulisser horizontalement dans leur logement, de telle sorte que l'un d'entre eux fait saillie à l'intérieur de la virole 40 et maintient ainsi par sa bride le couvercle C qui lui correspond, alors que l'autre est effacé à l'intérieur de la couronne 54.

Le déplacement simultané des taquets 68a et 68b est assuré, pour chacun des taquets, par une came 70a et 70b respectivement. Les cames correspondant à deux taquets superposés sont portées toutes deux par un axe vertical 72 également logé dans la couronne 54. L'axe 72 porte à son extrémité supérieure un pignon 74 qui s'engrène sur une couronne dentée 76 reçue de façon tournante sur la couronne 54 au-dessus de la plaque 42. La rotation de la couronne 76 est commandée par un vérin 78 monté sur la virole 40, par exemple par l'intermédiaire d'une bielle 80. Cette rotation commande simultanément chaque groupe de deux taquets 70a et 70b.

Le tube support 84 de la perche télescopique 52 est lui aussi fixé sur la face supérieure de la plaque 42, en un autre point décalé par rapport à l'axe de pivotement 46 du barillet 44, de façon à définir un poste de transfert des couvercles dans la piscine et de fermeture des fûts. Ce poste peut par exemple être décalé de 120° par rapport au magasin 50, ce qui laisse alors une place pour un troisième poste tel qu'un poste d'outillage ou d'intervention, comme on le verra ultérieurement. Pour que l'axe du couvercle acheminé par le barillet 44 jusqu'à la perche 52 coïncide avec l'axe de cette dernière, on comprendra que les axes du magasin 50 et de la perche 52 sont placés à la même distance de l'axe de rotation du barillet 44.

La perche télescopique 52 est constituée de deux tubes verticaux coaxiaux 52a et 52b qui coulissent à l'intérieur du tube support 84 sous l'action d'un moteur 86 (figure 1) situé à la partie supérieure du tube support 84. Le moteur 86 et le réducteur qui lui est associé commandent la remontée de la perche télescopique 52 par l'intermédiaire de deux chaînes montées en parallèle et figurées schématiquement en 88 sur la figure 1. Les chaînes 88 sont protégées par un limiteur de couple (non représenté). L'ensemble est dimensionné de telle façon que les chaînes 88 ne soient jamais immergées.

La descente de la perche télescopique 52 s'effectue par gravité.

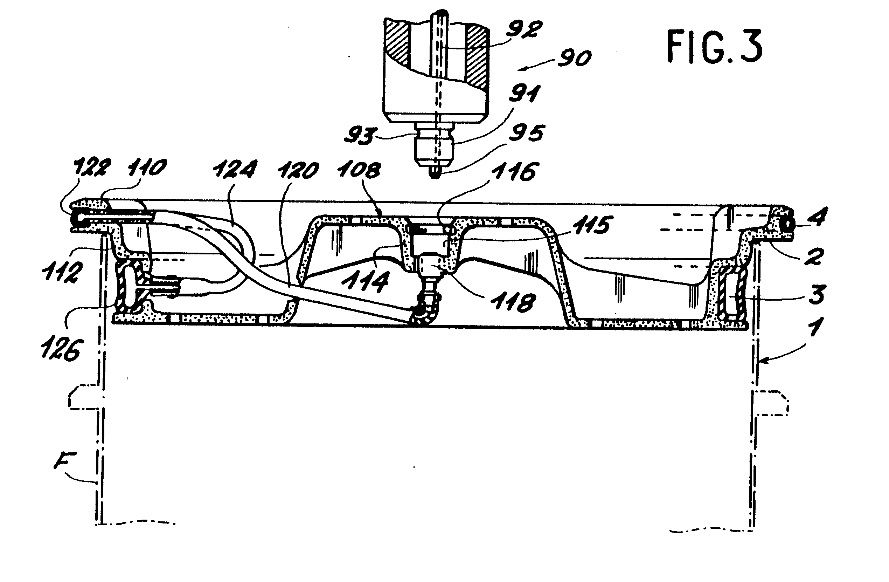

A son extrémité inférieure, le tube interne 52b de la perche porte une tête de préhension 90 servant également à commander le verrouillage du couvercle sur le fût. Cette tête de préhension 90 comprend principalement une partie cylindrique 91 qui pénètre comme on le verra ultérieurement dans une cavité correspondante 115 (figure 3) située au centre du couvercle, la préhension étant réalisée au moyen d'un joint torique 116 monté dans la cavité 115 et venant s'emboîter dans une gorge 93 formée sur la partie cylindrique 91. Comme on le verra aussi ultérieurement, les moyens pour verrouiller le couvercle sur le fût sont des moyens pneumatiques et la partie cylindrique 91 de la tête de préhension 90 comprend de ce fait à son extrémité un raccord pneumatique mâle 95 auto-obturant. Ce raccord 95 communique avec un conduit 92 disposé à l'intérieur de la perche 52 et dont l'autre extrémité est raccordée à un compresseur 94 monté à l'extrémité supérieure du tube support 84.

Lorsque la perche 52 est en position haute, la tête de préhension 90 se trouve située au-dessus du barillet 44. De ce fait, la plaque 42 présente à ce niveau un évidement 96 dans lequel peut être reçu un couvercle porté par la tête de préhension.

Afin de permettre la descente de la perche 52 à laquelle est accroché un couvercle C, le barillet 44, la semelle 38 et la dalle 36 comportent chacun un passage 98, 100 et 102 respectivement. Les dimensions de ces passages sont supérieures à celles des couvercles C et les passages 100 et 102 sont disposés coaxialement par rapport à la perche 52. En conséquence, lorsque l'axe du passage 98 du barillet se trouve également confondu avec l'axe de la perche 52, celle-ci peut descendre pour amener le couvercle C sur le fût F et fermer ce dernier, comme l'illustre la figure 1.

On décrira maintenant un cycle de fonctionnement de la machine selon l'invention, en se référant aux figures 1 et 2.

Si l'on suppose que le magasin à couvercles 50 est plein, la distribution des couvercles sur le barillet 44 s'effectue de la façon suivante.

Avant la mise en œuvre de la machine, la porte guillotine 64 obture l'extrémité inférieure de la couronne 54 et le système de distribution 58 occupe la position représentée sur la figure 2 dans laquelle les taquets 68a font saillie à l'intérieur de la couronne 54 alors que les taquets 68b sont effacés. Le couvercle C qui se trouve en dessous de la pile est alors maintenu par les taquets 68a.

Si l'on désire déposer un couvercle sur le barillet 44, qui comporte à cet effet une empreinte de réception 82 décalée de 120° par rapport au passage 98 si les postes de distribution et de fermeture des fûts sont eux-mêmes décalés de 120°, on actionne tout d'abord le vérin 78 de façon à assurer simultanément l'effacement des taquets inférieurs 68a et la venue en saillie à l'intérieur de la couronne 54 des taquets supérieurs 68b. Ces derniers assurent alors le maintien de l'avant dernier couvercle en partant du bas de la pile, alors que le couvercle du bas n'est plus maintenu que par la porte guillotine 64. Cette dernière peut alors être dégagée de la couronne 54 sous l'action du vérin 66, de telle sorte que le couvercle C qui se trouve en dessous de la pile chute dans l'empreinte 82 du barillet 44.

Le vérin 66 est alors actionné de façon à obturer à nouveau l'extrémité inférieure de la couronne 54 par la porte guillotine 64. On fait ensuite descendre d'une unité le reste de la pile de couvercles C contenue dans le magasin en actionnant le vérin 78. Le couvercle qui se trouve alors en bas de la pile affleure à son tour la porte guillotine 64.

Simultanément à ces deux dernières opérations, après qu'un couvercle ait été déposé dans l'empreinte 82 prévue à cet effet dans le barillet, celui-ci tourne sous l'action du moteur 48 de façon à amener ce couvercle C en dessous de la tête de préhension 90, la perche 52 étant en position haute. La descente par gravité de la perche 52 provoque l'accrochage automatique du couvercle sur la tête de préhension, celle-ci étant de préférence pourvue de moyens de guidage (non représentés) du raccord pneumatique 95, pour éviter sa détérioration. L'accrochage entre le joint torique 116 porté par le couvercle et la gorge 93 est automatique.

La perche 52 est ensuite remontée en position haute sous l'action du moteur 86, de façon à soulever le couvercle C au-dessus de l'empreinte 82. Une nouvelle rotation du barillet 44 commandée par le moteur 48 amène ensuite le passage 98 du barillet en dessous de la perche 52, de telle sorte que la descente de celle-ci dans la piscine 10 peut être entreprise. Cette descente s'effectue par gravité jusqu'à ce que le couvercle C vienne se loger dans l'extrémité ouverte du fût F à fermer. La fermeture pneumatique du fût est alors commandée à l'aide du compresseur 94.

La perche 52 est ensuite automatiquement déconnectée du couvercle par simple traction et remontée sous l'action du moteur 86. Au cours de cette remontée, une rampe de nettoyage 104 montée sur la semelle 38 de la machine, au niveau de la dalle 36, permet de rincer la perche 52.

La contamination est ainsi réduite autant que possible au niveau de la machine 22. En outre, il faut noter que l'ensemble de la machine 22 est étanche, notamment au niveau de la perche 52, et que le tube support 84, la plaque 42, la virole 40 et la semelle 38 sont réalisés en acier au carbone de forte épaisseur (50 à 60 mm) afin d'assurer la protection biologique.

A ce stade du fonctionnement, on se retrouve dans la situation initiale et un nouveau cycle peut être entrepris.

Lorsque tous les couvercles C contenus dans le magasin 50 ont ainsi été acheminés depuis ce dernier jusqu'à l'intérieur de la piscine 10 pour obturer un fût F, la partie supérieure 62 du magasin est dégagée comme on l'a représenté sur la partie gauche de la figure 2, de telle sorte que le magasin peut être rempli à nouveau à l'aide de moyens de manutention appropriés. Le contrôle de l'état de remplissage du magasin 50 s'effectue au moyen d'une tige de comptage 106 portée par la partie supérieure 62 du magasin.

Bien entendu, ces différentes opérations peuvent être réalisées soit de façon automatique, soit manuellement, chaque opération étant alors commandée indépendamment des autres.

On décrira maintenant plus en détail la structure des couvercles C prévus pour être utilisés avec la machine 22 selon l'invention, en se référant à la figure 3.

Les couvercles C sont constitués par une plaque emboutie ou moulée 108, de préférence en alliage léger, définissant notamment une bride 110 apte à venir coiffer l'extrémité du fût, une partie cylindrique 112 apte à venir s'emboîter dans cette extrémité, et une partie centrale femelle 114 apte à recevoir la partie cylindrique de la tête de préhension 90 de la perche. La partie femelle 114 est bien entendu ouverte vers l'extérieur lorsque le couvercle est monté sur le fût et elle présente, comme on l'a vu précédemment, un joint torique 116 qui fait saillie vers l'intérieur de la partie 114, à proximité de l'extrémité ouverte de celle-ci. Comme on l'a vu précédemment, le joint 116 sert à la préhension du couvercle par la perche, la partie cylindrique de la tête de préhension 90 présentant à cet effet une gorge 93.

En son centre et dans le fond de la partie femelle 114, le couvercle C porte un raccord pneumatique femelle 118 auto-obturant, apte à coopérer avec le raccord auto-obturant 95 monté à l'extrémité de la tête de préhension 90.

Un tuyau souple 120 est branché sur le raccord 118 à l'une de ses extrémités et communique avec un joint torique 122 par son autre extrémité. Ce joint torique 122 est logé dans une gorge formée dans la périphérie de la bride 110, de telle sorte qu'il reste accessible lorsque le couvercle C est monté sur le fût F.

Un autre tuyau souple 124 fait communiquer le joint torique 122 avec un joint gonflable 126 logé dans une gorge formée dans la partie cylindrique 112 du couvercle. Le joint gonflable 126 présente une section sensiblement rectangulaire et relativement grande (par exemple 4 mm × 10 mm). Il assure la fermeture du fût par la venue en appui de sa face externe contre la face interne de l'ouverture de ce dernier.

L'utilisation d'un joint gonflable permet à la fois de réaliser facilement la fermeture du fût à distance et de prévoir un jeu relativement important entre la partie cylindrique 112 du couvercle et le diamètre interne de l'ouverture du fût, puisque la déformation du joint lors de son gonflage assure de toute manière la fermeture.

Si l'on se reporte à nouveau à la description qui a été faite précédemment de la machine 22, on comprend que lorsque le couvercle C est amené sur un fût F à l'aide de la perche 52, les raccords auto-obturants de la tête de préhension 90 et du couvercle font communiquer la conduite 92 avec le tuyau souple 120, de telle sorte que le joint 126 peut être gonflé à l'aide du compresseur 94. Dès que le gonflage est terminé, le raccord auto-obturant 118 se ferme et la fermeture du fût à l'aide du couvercle reste assurée pendant tout le transport ultérieur du fût, notamment dans le canal incliné 14 (figure 1).

Si l'on se reporte à nouveau à la figure 1, on voit que l'ouverture du fût au niveau du poste de stockage 12, peut être réalisée facilement dans la casemate 26 après que le fût ait été disposé verticalement, couvercle en bas. En effet, grâce à la présence du joint torique apparent 122, le perçage de ce joint 122 peut être réalisé à distance à l'aide du dispositif télécommandé 28, après un simple positionnement en hauteur du fût, la position angulaire n'ayant pas d'importance puisque le joint est visible sur toute la périphérie du couvercle. Le dispositif 28 peut de ce fait être constitué par un vérin pneumatique situé à l'extérieur de la casemate 26 et actionnant un poinçon 28a venant perforer le joint torique 122. Le joint 122 étant percé, le joint 126 se dégonfle et le couvercle ainsi que le contenu du fût tombent dans le silo 30 comme on l'a décrit précédemment.

Sur le couvercle C, les tuyaux souples 120 et 124 ainsi que le joint torique 122 peuvent être réalisés à l'aide d'un seul et même tube. De plus, les tuyaux 120 et 124 ainsi que les joints 122 et 126 sont réalisés de préférence en silicone gainé de nylon.

On notera que la machine 22 comporte de préférence un poste d'outillage ou d'intervention complémentaire décalé de 120° par rapport à la perche et par rapport au magasin. Un tel poste peut être équipé d'un ringard permettant d'assurer différentes opérations et une enceinte blindée peut y être accostée de façon étanche afin de permettre l'évacuation de pièces fortement contaminées et irradiantes, telles que la tête d'accrochage et de gonflage 90 ou que les garnitures des bagues de guidage des tubes télescopiques de la perche.

## Revendications

1. Machine pour la fermeture de fûts (F) à l'intérieur d'une piscine (10), caractérisée en ce qu'elle comprend une perche télescopique (52) équipée à son extrémité inférieure d'une tête de préhension (90), des moyens de manutention (86, 88) pour déplacer cette dernière entre une position basse située dans la piscine et une position haute située au-dessus de la piscine, des moyens de transfert (44, 50) pour transférer un couvercle (C) sous la tête de préhension lorsque celle-ci est en position haute, et des moyens de commande (94) pour la mise en œuvre de moyens de verrouillage (126) du couvercle (C) sur le fût (F) ; les moyens de manutention, les moyens de transfert et les moyens de commande étant situés au-dessus de la piscine et la tête de préhension portant des moyens de raccordement (92, 95) des moyens de commande (94) aux moyens de verrouillage (126).

2. Machine selon la revendication 1, caractérisée en ce que les moyens pour transférer un couvercle (C) sous la tête de préhension (90) comprennent un barillet (44) des moyens (50, 58, 64) pour déposer un couvercle sur le barillet, et des moyens (48) pour faire tourner le barillet, ce dernier présentant en outre au moins une ouverture (98) apte à permettre le passage d'un couvercle lorsque cette ouverture est placée en dessous de la tête de préhension et que cette dernière est en position haute.

3. Machine selon la revendication 2, caractérisée en ce que les moyens pour déposer un couvercle sur le barillet comprennent un magasin (50) pouvant contenir un certain nombre de couvercles empilés, une porte guillotine (64) apte à obturer la partie inférieure du magasin, et des moyens (58) pour retenir les autres couvercles lorsque le couvercle qui se trouve à la partie inférieure du magasin chute sur le barillet après ouverture de la porte.

4. Machine selon l'une quelconque des revendications 1 à 3, caractérisée en ce que la perche télescopique (52) coulisse verticalement dans un tube support (84) portant à son extrémité supérieure les moyens de manutention (86) et les moyens de commande (94).

5. Machine selon l'une quelconque des revendications 1 à 4, caractérisée en ce que la tête de préhension (90) comporte une partie cylindrique (91) présentant une gorge (93) dans laquelle peut venir s'emboîter un joint torique (116) logé dans une cavité du couvercle apte à recevoir la partie cylindrique, de façon à réaliser la préhension du couvercle.

6. Machine selon l'une quelconque des revendications 1 à 5, caractérisée en ce que les moyens de verrouillage du couvercle sur le fût comprennent au moins un joint gonflable (126) porté par le couvercle, les moyens de commande (94) étant des moyens de commande pneumatiques, et les moyens de raccordement comprenant des raccords pneumatiques auto-obturants (118).

7. Couvercle de fût prévu pour être mis en place à l'aide d'une machine selon la revendication 6, caractérisé en ce qu'il présente à sa périphérie au moins une gorge dans laquelle est logé le joint gonflable (126) et, dans sa partie centrale, un raccord pneumatique auto-obturant (118) communiquant avec le joint gonflable, et des moyens de préhension (116) aptes à coopérer avec la tête de préhension de la machine.

8. Couvercle selon la revendication 7, caractérisé en ce que le joint gonflable communique avec au moins une partie (122) apparente après fermeture du fût, cette partie pouvant être percée par des moyens appropriés lorsqu'on désire ouvrir le fût.

9. Couvercle selon la revendication 8, caractérisé en ce que ladite partie apparente est un joint torique (122) disposé à la périphérie d'une bride (110) formée sur le couvercle.

10. Couvercle selon l'une quelconque des revendications 7 à 9, caractérisé en ce que le couvercle comporte une cavité (115) au fond de laquelle est disposé le raccord pneumatique auto-obturant (118), les moyens de préhension comprenant un joint (116) logé dans ladite cavité et apte à venir se loger dans une gorge correspondante de la tête de préhension (90).

## Claims

1. Machine for closing drums (F) inside a pool (10), characterized in that it comprises a telescopic pole (52) equipped at its lower end with a gripping head (90), handling means (86, 88) for moving the latter between a low position in the pool and a high position above the pool, transfer means (44, 50) for transferring a cover (C) under the gripping head when the latter is in the high position, and control means (94) for activating means (126) for locking the cover (C) on the drum (F), the handling means, the transfer means and the control means being arranged above the pool, and the gripping head carrying means (92, 95) of connecting the control means (94) to the locking means (126).

2. Machine according to Claim 1, characterized in that the means for transferring a cover (C) under the gripping head (90) comprise a turret (44), means (50, 58, 64) of placing a cover on the turret and means (48) of rotating the turret, the latter also having at least one orifice (98) intended to allow the passage of a cover when this orifice is located underneath the gripping head and the latter is in the high position.

3. Machine according to Claim 2, characterized in that the means for placing a cover on the turret comprise a magazine (50) which can contain a certain number of stacked covers, a trap door (64) designed to close off the lower part of the magazine, and means (58) of retaining the other covers when the cover located in the lower part of the magazine falls onto the turret after the door has been opened.

4. Machine according to any one of Claims 1 to 3, characterized in that the telescopic pole (52) slides vertically in a supporting tube (84) which carries the handling means (86) and the control means (94) at its upper end.

5. Machine according to any one of Claims 1 to 4, characterized in that the gripping head (90) possesses a cylindrical part (91) having a groove (93), into which can fit an O-ring (116) seated in a cavity of the cover intended for receiving the cylindrical part, in order to grip the cover.

6. Machine according to any one of Claims 1 to 5, characterized in that the means of locking the cover on the drum comprise at least one inflatable gasket (126) carried by the cover, the control means (94) being pneumatic control means, and the connection means comprising self-sealing pneumatic unions (118).

7. Drum cover intended to be put in position by means of a machine according to Claim 6, characterized in that it has, on its periphery, at least one groove, in which the inflatable gasket (126) is seated, and, in its central part, a self-sealing pneumatic union (118) communicating with the inflatable gasket, and gripping means (116) intended to interact with the gripping head of the machine.

8. Cover according to Claim 7, characterized in that the inflatable gasket communicates with at least one part (122) visible after the drum has been closed, and this part can be perforated by suitable means when the drum is to be opened.

9. Cover according to Claim 8, characterized in that the said visible part is an O-ring (122) arranged on the periphery of a flange (110) formed on the cover.

10. Cover according to any one of Claims 7 to 9, characterized in that the cover has a cavity (115), at the bottom of which is arranged the self-sealing pneumatic union (118), the gripping means comprising an O-ring (116) seated in the said cavity and designed to fit into a corresponding groove in the gripping head (90).

## Patentansprüche

1. Maschine zum Verschließen von Fässern (F) im Inneren eines Beckens (10) gekennzeichnet durch eine Teleskopstange (52), welche an ihrem unteren Ende mit einem Greiferkopf (90) versehen ist, durch eine Bedienungseinrichtung (86, 88) zum Bewegen des Letzteren zwischen einer in dem Becken liegenden unteren Stellung und einer über dem Becken liegenden oberen Stellung, durch eine Überführungseinrichtung (44,50) zum Überführen eines Deckels (C) unter den Greiferkopf, wenn dieser sich in der oberen Stellung befindet, und durch eine Steuereinrichtung (94) für die Betätigung einer Verriegelungseinrichtung (126) des Deckels (C) auf den Faß (F) ; wobei die Bedienungseinrichtung, die Überführungseinrichtung und die Steuereintichtung oberhalb des Beckers angeordnet sind und der Greiferkopf Einrichtungen (92, 95) für die Verbindung der Steuereinrichtung (94) mit der Verriegelungseinrichtung (126) trägt.

2. Maschine nach Anspruch 1, dadurch gekennzeichnet, daß die Einrichtung zum Überführen eines Deckels (C) unter den Greiferkopf (90) einen Drehtisch (44) eine Einrichtung (50, 58, 64) zum Auflegen eines Deckels auf den Drehtisch und eine Einrichtung (43) zum Drehen des Drehtischs aufweist, wobei der letztere in übrigen wenigstens eine Öffnung (98) aufweist, welche den Durchtritt eines Deckels gestattet, wenn sich die Öffnung unterhalb des Greiferkopfs befindet und der Letztere in der oberen Stellung ist.

3. Maschine nach Anspruch 2, dadurch gekennzeichnet, daß die Einrichtung zum Auflegen eines Deckels auf den Drehtisch ein Magazin (50), welches eine gewisse Anzahl von gestapelten Deckeln aufzunehmen vermag, eine Schiebetür (64), mittels welcher das untere Tei des Magazins verschließbar ist, und eine Einrichtung (58) zum Festhalten der anderen Deckel, wenn der sich im unteren Teil des Magazins befindende Deckel nach dem Öffnen der Tür auf den Drehtisch herabfällt, aufweist.

4. Maschine nach einem der Ansprüche 1 bis 3, dadurch gekennzeichnet, daß die Teleskopstange (52) senkrecht in einem Tragrohr (84) gleitet, welches an seinem oberen Ende die Bedienungseinrichtung (85) und die Steuereinrichtung (94) trägt.

5. Maschine nach einem der Ansprüche 1 bis 4, dadurch gekennzeichnet, daß der Greiferkopf (90) ein zylindrisches Teil (91) hat, welches eine Ringaut (93) aufweist, mit welcher eine in einem für die Aufnahme des zylindrischen Teils bestimmten Hohlraum des Deckels angeordnete Ringwulstdichtung (116) in Eingriff bringbar ist, um das Ergreifen des Deckels zu bewerkstelligen.

6. Maschine nach einem der Ansprüche 1 bis 5, dadurch gekennzeichnet, daß die Einrichtung zum Verriegeln des Deckels auf dem Faß wenigstens eine vom Deckel getragene aufblähbare Dichtung (126) aufweist, wobei die Steuereinrichtung (94) eine pneumatische Steuereinrichtung ist, und die Verbindungseinrichtung selbstdichtende pneumatische Verbindungen (118) aufweist.

7. Zum Aufbringen mittels einer Maschine nach Anspruch 6 bestimmter Deckel für ein Faß, dadurch gekennzeichnet, daß er entlang seinem Umfang wenigstens eine Nut, in welcher die aufblähbare Dichtung (126) angeordnet ist, und in seinem mittleren Teil einen mit der aufblähbaren Dichtung strömungsverbundenen, selbstdichtenden Anschluß (118) sowie eine Halteeinrichtung (116) aufweist, welche zum Zusammenwirken mit dem Greiferkopf der Maschine ausgebildet sind.

8. Deckel nach Anspruch 7, dadurch gekennzeichnet, daß die aufblähbare Dichtung mit wenigstens einem Teil (122) strömungsverbunden ist, welches nach dem Verschließen des Fasses zugänglich ist und mittels einer geeigneten Einrichtung perforierbar ist, wenn das Faß geöffnet werden soll.

9. Deckel nach Anspruch 8, dadurch gekennzeichnet, daß das zugängliche Teil eine Ringwulstdichtung (122) ist, welche am Umfang eines am Deckel geformten Flanschs (110) angeordnet ist.

10. Deckel nach einem der Ansprüche 7 bis 9, dadurch gekennzeichnet, daß er einen Hohlraum (115) aufweist, an dessen Boden der selbstdichtende pneumatische Anschluß (118) angeordnet ist, wobei die Halteeinrichtung eine in dem Hohlraum angeordnet Dichtung (116) aufweist, welche in einer entsprechenden Ringnut des Greiferkopfs (90) Aufnahme finden kann.

FIG.1

FIG.2

0 115 978

FIG.3